# EUROPÄISCHE PATENTANMELDUNG

(11) **EP 4 663 376 A1**
(43) Veröffentlichungstag der Anmeldung: **17.12.2025**
(21) Anmeldenummer: 25180932.3
(22) Anmeldetag: 05.06.2025
(51) Int. Cl.: B29C 49/06, B29C 49/64, B29C 49/78, B29L 31/00

(54) **VERFAHREN ZUM ERMITTELN VON EINSTELLPARAMETERN FÜR EINE TEMPERIERVORRICHTUNG ZUR TEMPERATURKONDITIONIERUNG VON VORFORMLINGEN SOWIE STEUERUNG DAFÜR**

(30) Priorität: 14.06.2024 DE 102024116795
(71) Anmelder: KHS GmbH, 44143 Dortmund (DE)
(72) Erfinder: Zimmering, Bernd, 44143 Dortmund (DE); Ulutürk, Deniz, 44143 Dortmund (DE); Keil, Gernot, 44143 Dortmund (DE)
(74) Vertreter: Eisenführ Speiser

(57) **Zusammenfassung**

Die Erfindung betrifft ein Verfahren zum Betreiben einer Temperiervorrichtung (12), umfassend ein Ermitteln von Einstellparametern (28) mit einer Steuerung (14) für die Temperiervorrichtung (12) zur Temperaturkonditionierung von Vorformlingen (42) aus einem thermoplastischen Material in einem Förderbereich (38) der Temperiervorrichtung (12), wobei die Vorformlinge (42) durch die Temperaturkonditionierung in der Temperiervorrichtung (12) auf einen nachfolgenden Umformungsvorgang vorbereitet werden, wobei mehrere Heizmodule (30) entlang des Förderbereichs (38) der Temperiervorrichtung (12) angeordnet sind. Die Steuerung (14) führt zum Ermitteln der Einstellparameter (28) ein Abrufen eines Preformmodells (18), das einem Modell eines Vorformlings (42) entspricht, wobei das Preformmodell (18) ein zeitlicher Temperaturverlauf in jeder von mehreren radial durch das Preformmodell (18) definierten Schichten einer Wandung des Vorformlings (42) in Abhängigkeit von mindestens einem in mindestens eine der Schichten eingetragenen zeitlichen Wärmeleistungsverlauf beschreibt, ein Abrufen eines Temperiervorrichtungsmodells (20), das einem Modell der Temperiervorrichtung (12) entspricht, wobei das Temperiervorrichtungsmodell (20) den in mindestens eine Schicht eintragbaren zeitlichen Wärmeleistungsverlauf im durch das Temperiervorrichtungsmodell (20) definierten Förderbereich (38) in Abhängigkeit von den Einstellparametern (28) für die Heizmodule (30), die Heizleistungsparametern (34) entsprechen, beschreibt, ein Vorgeben einer Maximaltemperatur (24) und/oder eines vordefinierten Temperaturbereichs (26) und ein Ermitteln der Einstellparameter (28) mit denen durch das Temperiervorrichtungsmodell (20) der mindestens eine zeitliche Wärmeleistungsverlauf bestimmbar ist, mit dem durch das Preformmodell (18) Temperaturen aller Temperaturverläufe (76a, 76b, 76c, 76d), zumindest in einem vordefinierten Zeitpunkt der Temperaturverläufe (76a, 76b, 76c, 76d), bestimmbar sind, die unterhalb der Maximaltemperatur und/oder innerhalb des vordefinierten Temperaturbereichs (26) liegen, aus.

Die Erfindung betrifft ferner eine Steuerung zum Ermitteln von Einstellparametern (28) für eine Temperiervorrichtung (12), ein System mit einer Steuerung und einer Temperiervorrichtung (12) sowie ein Computerprogrammprodukt.

## Beschreibung

Die Erfindung betrifft den Bereich einer Temperaturkonditionierung von Vorformlingen zur Vorbereitung auf einen nachfolgenden Umformprozess des Vorformlings in einen Behälter und zum Befüllen des Behälters mit einem flüssigen Füllgut.

Vorformlinge werden solche Hohlkörper genannt, die durch ein Urformverfahren, wie etwa ein Spritzgießen, aus einem thermoplastischen Kunststoff hergestellt werden. Derartige Vorformlinge dienen als Rohlinge für die Herstellung von Behältern, wie Kunststoffflaschen, etwa zur Bereitstellung von Getränken.

Gemäß dem Stand der Technik ist es bekannt, Behälter durch Blasformen aus Vorformlingen aus einem thermoplastischen Material herzustellen. Die Behälter werden aus Vorformlingen, beispielsweise aus PET (Polyethylenterephthalat), hergestellt, indem diese innerhalb einer Blasmaschine unterschiedlichen Bearbeitungsstationen zugeführt werden.

Typischerweise weist eine Blasmaschine eine Temperiervorrichtung, die auch Heizeinrichtung oder Heizstrecke genannt werden kann, zum Temperieren, nämlich zum thermischen Konditionieren, der Vorformlinge sowie eine Blaseinrichtung mit wenigstens einer Blasstation auf. Im Bereich der Blasstation wird der jeweils zuvor temperierte Vorformling zu einem Behälter expandiert. Die Expansion erfolgt überwiegend mithilfe eines Druckgases, wie beispielsweise Druckluft, als Druckmedium, das mit einem Formdruck in den zu expandierenden Vorformling eingeleitet wird.

Unter Temperierung oder thermischer Konditionierung wird dabei verstanden, dass der Vorformling auf eine für die Blasformung geeignete Temperatur erwärmt und dem Vorformling hierbei beispielsweise ein Temperaturprofil aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und in dieser mit dem vorgesehenen Produkt oder Füllgut gefüllt. Es sind auch kombinierte Formfüllstationen bekannt, bei denen das Füllgut als Druckmedium zum Expandieren des Vorformlings Verwendung findet.

Zum Temperieren der Vorformlinge mit der Temperiervorrichtung werden mehrere Heizmodule, die entlang eines Förderbereichs der Temperiervorrichtung angeordnet sind, durch eine Steuerung angesteuert. Üblicherweise sind die Heizmodule so eingestellt, dass jedes der Module die gleiche Heizleistung aufnimmt und daraus eine in den Vorformling eintragbare Wärmeleistung erzeugt. Die Heizleistung wird so eingestellt, dass entlang der Förderstrecke die Temperatur des Vorformlings derart erwärmt wird, dass dieser am Ende der Förderstrecke nach Verlassen der Temperiervorrichtung eine bestimmte Temperatur aufweist. Hierzu wird die Heizleistung und die daraus resultierende Wärmeleistung der Heizmodule häufig durch Versuche eingestellt.

Aus dem Dokument EP 3 342 579 B1 ist beispielsweise ein Verfahren zum Einstellen von Heizstationen bekannt, bei dem mithilfe eines Testvorformlings die Heizleistung eingestellt wird. Hierbei wird die Temperatur des Testvorformlings nach dem Verlassen der Heizstrecke gemessen und Energiemengen, die von Heizkästen erzeugt werden, in Abhängigkeit von der Messung angepasst.

Eine derartige Anpassung der Energiemenge der Heizkästen sowie auch die manuelle Einstellung der Heizkästen durch solche Versuche sind sehr unpräzise und aufwendig. Insbesondere sind solche Verfahren auch während des Betriebs einer Temperiervorrichtung nicht einsetzbar.

In der prioritätsbegründenden deutschen Patentanmeldung hat das Deutsche Patent- und Markenamt das folgende Dokument recherchiert: US 2018/0178431 A1.

Aufgabe der vorliegenden Erfindung ist es daher den Problemen des Standes der Technik zu begegnen. Insbesondere soll ein Verfahren zum Betreiben einer Temperiervorrichtung vorgeschlagen werden, bei dem Einstellparameter für die Temperiervorrichtung ermittelt werden, die eine verbesserte Temperaturkonditionierung des Vorformlings ermöglichen. Insbesondere soll das Verfahren auch während des Betriebs der Temperiervorrichtung möglich sein, um Einstellparameter während des Betriebs anzupassen. Jedenfalls soll eine Alternative zum aus dem Stand der Technik Bekannten gefunden werden.

Hierzu schlägt die Erfindung ein Verfahren zum Betreiben einer Temperiervorrichtung nach Anspruch 1 vor. Gemäß dem Verfahren zum Betreiben der Temperiervorrichtung umfasst das Betreiben ein Ermitteln von Einstellparametern für die Temperiervorrichtung mit einer Steuerung.

Mit der Steuerung werden demnach Einstellparameter für die Temperiervorrichtung zur Temperaturkonditionierung von Vorformlingen ermittelt. Vorformlinge entsprechen Hohlkörpern, die beispielsweise durch ein Urformverfahren, wie ein Spritzgießen, aus einem thermoplastischen Kunststoff hergestellt werden. Solche Vorformlinge dienen als Rohlinge für die Herstellung von Behältern, wie Kunststoffflaschen, etwa zur Bereitstellung von Getränken. Die Vorformlinge bestehen beispielsweise aus PET (Polyethylenterephthalat). Die Temperaturkonditionierung der Vorformlinge erfolgt in einem Förderbereich der Temperiervorrichtung, wobei die Vorformlinge durch die Temperaturkonditionierung in der Temperiervorrichtung auf einen nachfolgenden Umformungsvorgang vorbereitet werden. Entlang des Förderbereichs der Temperiervorrichtung sind mehrere Heizmodule angeordnet. Die Heizmodule entsprechen beispielsweise Infrarotstrahlern, die auch kurz als IR-Strahler bezeichnet werden können.

Die Steuerung führt zum Ermitteln der Einstellparameter zunächst einen Schritt aus, der einem Abrufen eines Preformmodells entspricht. Das Preformmodell entspricht einem Modell eines Vorformlings. Das Preformmodell beschreibt einen Zusammenhang zwischen mindestens einer vorgegebenen eintragbaren Wärmeleistung in einen Vorformling und einer aus der Wärmeleistung resultierenden Temperatur in jeder von mehreren durch das Preformmodell definierten Schichten einer Wandung eines Vorformlings. Die Temperaturen der jeweiligen Schichten können also in Abhängigkeit von mindestens einer Wärmeleistung bestimmt werden.

Beispielsweise gehen Eigenschaften eines vorbestimmten Kunststoffs eines Vorformlings, wie etwa ein wellenlängenabhängiger Absorptionsgrad, in das Preformmodell ein. Diese Eigenschaften lassen sich vorab vorzugsweise in einem Spektralapparat bestimmen oder sie können in einem Normheizofen durch Anwendung einer Heizleistung und eines definierten Heizintervalls als Summenabsorptionsgrad (Mittel über alle Wellenlängen) bestimmt werden.

Somit ist mit dem Preformmodell auch ein zeitlicher Temperaturverlauf jeweils in jeder der Schichten des Vorformlings in Abhängigkeit von mindestens einem eingetragenen zeitlichen Wärmeleistungsverlauf bestimmbar.

Demnach sind durch das Preformmodell für die Wandung eines realen Vorformlings mehrere radiale Schichten definiert. Der zeitliche Temperaturverlauf, der durch das Preformmodell beschrieben wird, wird entsprechend für jede der definierten Schichten beschrieben. Der Temperaturverlauf ist hierbei abhängig von dem eingetragenen zeitlichen Wärmeleistungsverlauf, der in mindestens eine der Schichten eingetragen wird. Der eingetragene zeitliche Wärmeleistungsverlauf entspricht somit vorzugsweise einer Eingangsfunktion für das Preformmodell und die Temperaturverläufe der Schichten entsprechen vorzugsweise Ausgangsfunktionen des Preformmodells. Vorzugsweise wird demnach durch das Preformmodell eine theoretische Beschreibung bereitgestellt, die beschreibt, dass ein Wärmeleistungsverlauf, der durch mindestens ein Heizmodul, das außerhalb des Vorformlings angeordnet ist, erzeugt wird. Die Wärmeleistung gemäß dem Wärmeleistungsverlauf wird beispielsweise in eine äußere Schicht des Vorformlings eingetragen und es wird der Temperaturverlauf mit dem Preformmodell für jede der Schichten beschrieben, der sich in Abhängigkeit von der in die äußere Schicht eingetragenen Wärmeleistung gemäß ihrem Verlauf ergibt.

Vorliegend wird vorzugsweise, insbesondere zur Vereinfachung des Preformmodells, davon ausgegangen, dass mindestens oder genau ein Temperaturverlauf pro Schicht bestimmt wird. Es werden somit räumlich unterschiedliche Temperaturen innerhalb einer jeweiligen Schicht, die zu einem Zeitpunkt auftreten können, vernachlässigt. Mit dem Preformmodell wird also bevorzugt lediglich pro Zeitpunkt und Schicht eine einzige Temperatur, die beispielsweise stellvertretend für unterschiedlichen Temperaturen innerhalb einer jeweiligen Schicht zum jeweiligen Zeitpunkt ist, bestimmt.

Das Preformmodell wird von der Steuerung beispielsweise aus einem Speicher abgerufen, der beispielsweise Bestandteil der Steuerung ist und in dem das Preformmodell abgelegt wurde, nachdem es durch theoretische oder praktische Versuche und/oder Berechnungen bestimmt wurde. Vorzugsweise kann das Preformmodell auch über eine Netzwerkverbindung von einem entfernten Rechner oder Speicher abgerufen werden.

Ferner umfasst das Verfahren das Abrufen eines Temperiervorrichtungsmodells. Das Temperiervorrichtungsmodell entspricht einem Modell der Temperiervorrichtung, also insbesondere der Komponenten im Förderbereich. Das Temperiervorrichtungsmodell beschreibt so den eintragbaren Verlauf einer Wärmeleistung, der theoretisch in mindestens eine Schicht eines Vorformlings gemäß dem Preformmodell eingetragen wird, wenn sich der Vorformling entlang des Förderbereichs bewegt. Vorzugsweise wird somit ein Wärmeleistungsverlauf für einen vordefinierten Zeitbereich beschrieben, wobei der Zeitbereich der Zeit entspricht, die der Vorformling bei vorgegebener Fördergeschwindigkeit des Vorformlings vom Eintreten in die Temperiervorrichtung bis zum Verlassen der Temperiervorrichtung benötigt.

Der Wärmeleistungsverlauf, der vorzugsweise einer Ausgangsfunktion des Temperiervorrichtungsmodells entspricht, wird in Abhängigkeit von den Einstellparametern für die Heizmodule des Förderbereichs beschrieben. Das Temperiervorrichtungsmodell umfasst demnach eine theoretische oder mathematische Beschreibung von einem Förderbereich der Temperiervorrichtung, der mehrere Heizmodule umfasst und dient, um einen zeitlichen Wärmeleistungsverlauf in Abhängigkeit von den Einstellparametern für die Heizmodule zu beschreiben. Das Temperiervorrichtungsmodell ist für eine Temperiervorrichtung durch Versuche oder Berechnungen ermittelt worden und beispielsweise in einem Speicher der Steuerung oder einem entfernten Speicher abgelegt, um von der Steuerung über ein Netzwerk abgerufen zu werden.

Zur Bestimmung des Temperiervorrichtungsmodells wird beispielsweise in einem Teilmodell ein differentielles Wärmeleistungsprofil eines jeden Heizmoduls berechnet, wobei ein Parameter, der als Wellenlängenbereich dλ bezeichnet wird, die Strahlungsleistung beschreibt, die bei vorgegebener Strahlertemperatur bezogen auf die Strahlungsfläche im betrachteten Wellenlängenintervall vorliegt. Der Parameter Strahlertemperatur skaliert mit der Heizleistung und beschreibt die Gesamtleistung im Profil und ist demjenigen Wellenlängenbereich zugeordnet, in welchem bei vorgegebener Temperatur die maximale differentielle Heizleistung vorliegt. Das Teilmodell hat als Ausgang die Heizleistung als differentielle Heizleistung dP/dλ und als Eingangsparameter die Leistung und die Fläche der Strahler.

Zusammen mit dem Preformmodell kann so vorzugsweise bestimmt werden, welcher Wärmeeintrag und damit verbunden welche Temperaturerhöhung sich aufgrund dieser Heizleistung dP/dλ in den einzelnen Preformschichten einstellt: Die differentielle Heizleistung dP/dλ wird abhängig vom betrachteten Wellenlängenbereich über den wellenlängenabhängigen Absorptionskoeffizienten µ = µ(λ) des Kunststoffes während der Transmission der Strahlung durch den Kunststoff exponentiell gedämpft und in Wärme umgesetzt.

Weiter kann über die Wärmeleitungsgleichung berechnet werden, wie sich die Temperaturen in den Preformschichten aufbauen und sich die erzeugten Temperaturprofile zeitlich ausgleichen.

Vorzugsweise wird berechnet, wie sich die Temperatur der Außenhaut durch Anwenden eines kühlenden Luftstromes verändert.

Ferner betrifft das Verfahren das Vorgeben einer Maximaltemperatur und/oder eines vordefinierten Temperaturbereichs. Die Vorgabe kann beispielsweise von einer Regelung der Steuerung, einem Speicher der Steuerung oder durch eine Eingabe eines Benutzers vorgegeben werden.

Gemäß einem weiteren Schritt des Verfahrens werden nun Einstellparameter in Abhängigkeit vom Temperiervorrichtungsmodell und vom Preformmodell bestimmt. Die Einstellparameter werden hierbei derart bestimmt, dass daraus mit dem Temperiervorrichtungsmodell der mindestens eine zeitliche Wärmeleistungsverlauf resultiert, durch den unter Berücksichtigung des Preformmodells Temperaturen zumindest in einem vordefinierten Zeitpunkt oder während des gesamten Zeitraums der Temperaturverläufe in jeder der Schichten unterhalb der Maximaltemperatur liegen. Alternativ oder zusätzlich werden die Einstellparameter derart bestimmt, dass zumindest in einem vordefinierten Zeitpunkt der Temperaturverläufe die Temperaturen aller Temperaturverläufe der mit dem Preformmodell bestimmten Schichten innerhalb des vordefinierten Temperaturbereichs liegen. Der vordefinierte Zeitpunkt ist vorzugsweise der Zeitpunkt, der im Temperaturverlauf dem Zeitpunkt des Wärmeleistungsverlaufs entspricht, der den Bereich beschreibt, in dem die Vorformlinge die Temperiervorrichtung verlassen.

Demnach werden vorzugsweise genau die Einstellparameter ermittelt, aus denen genau der zeitliche Wärmeleistungsverlauf bestimmbar ist, der zu Temperaturen aller Temperaturverläufe, nämlich in jeder der Schichten des Preformmodells bzw. der Vorformlinge, führt, deren Temperaturen immer unterhalb der Maximaltemperatur in dem vordefinierten Zeitpunkt innerhalb des vordefinierten Temperaturbereichs liegen.

Das Verfahren kann gemäß einer Ausführungsform in mehreren Schleifen durchgeführt werden, indem zunächst initiale Einstellparameter, die beispielsweise vorgegeben werden, in einem ersten Durchlauf verwendet werden, um mit dem Temperiervorrichtungsmodell den entsprechenden zeitlichen Wärmeleistungsverlauf zu bestimmen. Aus dem bestimmten Wärmeleistungsverlauf werden dann mit dem Preformmodell die Temperaturverläufe bestimmt. Die Temperaturen der Temperaturverläufe werden dann im Hinblick auf die Kriterien überprüft, die durch die vorgegebene Maximaltemperatur und/oder den vordefinierten Temperaturbereich vorgegeben werden. Die Kriterien sind etwa nur dann erfüllt, wenn die Temperaturen aller Temperaturverläufe, nämlich in jeder der Schichten, immer unterhalb der Maximaltemperatur liegen und die Temperaturen aller Temperaturverläufe in dem vordefinierten Zeitpunkt innerhalb des vordefinierten Temperaturbereichs liegen. Ist das Kriterium nicht erfüllt, werden die Einstellparameter angepasst und es beginnt ein zweiter Durchlauf. Dies wird so lange ausgeführt, bis die Kriterien erfüllt sind. Dann werden die zuletzt angepassten Einstellparameter verwendet, um die Temperiervorrichtung damit anzusteuern.

Das Preformmodell in Zusammenhang mit dem Temperiervorrichtungsmodell liefert sowohl eine zeitliche Entwicklung der Temperatur in einer jeden Schicht als auch ein Temperaturprofil über die Wandstärke der Preform, also das Temperaturprofil von Schicht zu Schicht.

Durch Verwendung eines Preformmodells, das einen Temperaturverlauf in jeder von mehreren radialen Schichten einer Wandung beschreibt, ist der zeitliche Temperaturverlauf verteilt über die Wandung genauer bestimmbar. Der Temperaturverlauf ist nämlich so bestimmbar, dass eine besondere geeignete Einstellung der Temperiervorrichtung gefunden werden kann, die eine effiziente Erwärmung ermöglicht, ohne dass vorgegebene maximale Temperaturen überschritten werden und sich die Temperatur in jeder der mehreren Schichten in einem vordefinierten Bereich beim Verlassen der Temperiervorrichtung befinden. So kann sichergestellt werden, dass durch effiziente Temperierung eine geeignete Temperatur in allen Schichten der Wandung eines Vorformlings nach Verlassen der Temperiervorrichtung vorliegt und keine Überschreitung einer Maximaltemperatur auftritt, die zu einer Beeinträchtigung des Materials des Vorformlings führt.

Gemäß einer weiteren Ausführungsform ist es durch Vorgabe des Temperiervorrichtungsmodells und eines von mehreren vordefinierten Betriebsstadien, die jeweils in das Temperiervorrichtungsmodell einfließen, möglich, einen Wärmeeintrag, also eine eintragbare Wärmeleistung, in unterschiedlichen Betriebsstadien im Temperiervorrichtungsmodell zu beschreiben. So sind Betriebsstadien beschreibbar, um Anlaufprozesse der Temperiervorrichtung gegenüber einem eingestellten Betrieb zu beschreiben und entsprechend die Einstellparameter während des Betreibens einer Temperiervorrichtung durch das Verfahren anzupassen.

Eine verbesserte und effiziente Einstellung der Temperiervorrichtung ist so möglich.

Gemäß einer Ausführungsform der Erfindung ist mehreren oder allen Heizmodulen jeweils ein Heizleistungsparameter als Einstellparameter zugeordnet.

Der Heizleistungsparameter, der einem Heizmodul als Einstellparameter zugeordnet ist, gibt die zu erzeugende Heizleistung des zugeordneten Heizmoduls an. Das Verfahren umfasst ferner das Betreiben der Heizmodule mit dem jeweils zugeordneten Heizleistungsparameter.

Alternativ oder zusätzlich umfasst die Ausführungsform, dass mehreren oder allen Heizmodulen jeweils ein Positionsparameter als Einstellparameter zugeordnet ist. Der Positionsparameter gibt die Position des Heizmoduls im oder am Förderbereich an. Das Verfahren umfasst ferner das Anordnen der Heizmodule an der zugeordneten Position, beispielsweise durch automatische Verstelleinrichtungen, die beispielsweise von der Steuerung angesteuert werden. Alternativ zum automatischen Anordnen der Heizmodule an den zugeordneten Positionen, die über einen Positionsparameter angegeben werden, umfasst das Verfahren das Ausgeben einer Angabe der zugeordneten Position für eine manuelle Anordnung durch einen Benutzer. Der Positionsparameter eines Heizmoduls ordnet dem Heizmodul also eine Position zu, die also als zugeordnete Position bezeichnet werden kann.

Demnach ist mit den Einstellparametern als Heizleistungsparameter und/oder als Positionsparameter die Heizleistung, also somit eine tatsächliche Wärmeleistung, die in einen Vorformling eingebracht wird, einstellbar. Dies kann beispielsweise automatisiert, insbesondere beim Einstellen der Heizleistungsparameter, erfolgen und so der Heizleistungsparameter während eines Anlaufens gegenüber einem kontinuierlichen Betrieb einer Temperiervorrichtung angepasst werden.

Gemäß einer weiteren Ausführungsform werden mit dem Temperiervorrichtungsmodell mehrere Wärmeleistungsverläufe in Abhängigkeit von den Einstellparametern beschrieben. Jeder der Wärmeleistungsverläufe wird mit dem Temperiervorrichtungsmodell jeweils für eine der Schichten des Preformmodells beschrieben. Zudem wird mit dem Preformmodell jeder Temperaturverlauf, der für eine Schicht beschrieben wird, in Abhängigkeit von dem der Schicht zugeordneten Wärmeleistungsverlauf beschrieben. Insbesondere wird in dem Preformmodell der Temperaturverlauf für mehrere oder jede Schicht jeweils in Abhängigkeit von dem der Schicht zugeordneten Wärmeleistungsverlauf und dem Wärmeleistungsverlauf einer weiteren angrenzenden Schicht beschrieben. Vorzugsweise wird der Temperaturverlauf für jede der Schichten jeweils, abgesehen von der äußeren Schicht, in Abhängigkeit von dem der Schicht zugeordneten Wärmeleistungsverlauf und dem Wärmeleistungsverlauf einer weiter außenliegenden Schicht, und für die äußere Schicht nur in Abhängigkeit von dem der äußeren Schicht zugeordneten Wärmeleistungsverlauf beschrieben.

Eine Wärmeverteilung in einem Vorformling durch die unterschiedlichen Temperaturverläufe kann so exakter beschrieben werden.

Gemäß einer weiteren Ausführungsform umfasst die Temperiervorrichtung mindestens einen am Förderbereich angeordneten Kühlbereich oder ein Kühlelement, das am Förderbereich angeordnet ist. Der Kühlbereich entspricht beispielsweise einem Bereich, in dem kein Heizelement angeordnet ist. Das Kühlelement entspricht vorzugsweise einem Lüfter. Ferner beschreibt das Temperiervorrichtungsmodell mindestens einen aus mindestens einer Schicht austragbaren zeitlichen Konvektionsleistungsverlauf. Der Konvektionsleistungsverlauf entspricht dem zeitlichen Verlauf der Konvektionsleistung im durch das Temperiervorrichtungsmodell definierten Förderbereich in Abhängigkeit von einem Einstellparameter für den Kühlbereich oder das Kühlelement. Der Einstellparameter für den Kühlbereich oder das Kühlelement kann auch als Kühlparameter bezeichnet werden. Zudem wird mit dem Preformmodell der zeitliche Temperaturverlauf in mindestens einer Schicht zusätzlich in Abhängigkeit von dem Konvektionsleistungsverlauf beschrieben. Außerdem umfasst das Ermitteln der Einstellparameter das Ermitteln des Einstellparameters für den Kühlbereich oder das Kühlelement, also des Konvektionsleistungsverlaufs.

Demnach ist im Förderbereich ein Kühlbereich oder Kühlelement angeordnet, der im Temperiervorrichtungsmodell durch einen zeitlichen Konvektionsleistungsverlauf beschrieben wird, wobei der zeitliche Konvektionsverlauf von Einstellparametern für den Kühlbereich abhängig ist. Der Konvektionsleistungsverlauf beschreibt die Wärmeleistung, die aus einer Schicht des Vorformlings, insbesondere der äußeren Schicht, in eine Umgebung abgegeben wird. Mit dem Preformmodell wird dann der zeitliche Temperaturverlauf in mindestens einer der Schichten in Abhängigkeit von dem zeitlichen Konvektionsleistungsverlauf beschrieben. In Abhängigkeit vom Temperiervorrichtungsmodell und vom Preformmodell wird so ein Einstellparameter für den Kühlbereich, nämlich ein Kühlparameter, ermittelt. Vorzugsweise beschreibt der Konvektionsleistungsverlauf auch eine Umgebungstemperatur des Förderbereichs. Vorzugsweise ist ein Einstellparameter für das Temperiervorrichtungsmodell auch die Umgebungstemperatur.

Demnach kann auch eine Kühlung des Vorformlings während des Temperiervorgangs durch Konvektion bestimmt und entsprechende Einstellparameter für den Kühlbereich oder das Kühlelement vorab oder auch während des Betriebs bestimmt werden.

Gemäß einer weiteren Ausführungsform entspricht der Kühlparameter einem Positionsparameter. Der Positionsparameter gibt die Position des Kühlbereichs oder Kühlelements am oder im Förderbereich an. Alternativ oder zusätzlich gibt der Positionsparameter eine Geometrie, z. B. eine Länge des Kühlbereichs im Förderbereich, des Kühlbereichs an. Ferner umfasst das Verfahren das Anordnen des Kühlbereichs oder des Kühlelements an der zugeordneten Position, also der durch den Positionsparameter beschriebenen Position. Entsprechend betrifft das Verfahren das Ermitteln des Positionsparameters in Abhängigkeit vom Preformmodell und vom Temperiervorrichtungsmodell.

Alternativ oder zusätzlich umfasst das Verfahren anstatt des Anordnens des Kühlbereichs ein Ausgeben der Position zum manuellen Anordnen des Kühlelements an der zugeordneten Position. Somit kann auch eine Position des Kühlelements oder Kühlbereichs gemäß dem Verfahren bestimmt werden.

Gemäß einer weiteren Ausführungsform entspricht der Kühlparameter einer Ansteuerleistung des Kühlelements, der die zu erzeugende Kühlleistung des Kühlelements angibt. Beispielsweise entspricht die Ansteuerleistung der Leistung, mit der das Kühlelement betrieben werden muss. Ferner umfasst das Verfahren das Ansteuern des Kühlelements mit der Ansteuerleistung.

Gemäß einer weiteren Ausführungsform ist der mit dem Preformmodell ermittelte Temperaturverlauf mindestens einer Schicht abhängig von mindestens einem mit dem Preformmodell beschriebenen Temperaturverlauf einer benachbarten Schicht. Das heißt, das Preformmodell berücksichtigt beim Ermitteln eines Temperaturverlaufs einer der Schichten auch den Temperaturverlauf mindestens einer benachbarten Schicht. Eine noch genauere Bestimmung der Temperaturverläufe in den Schichten ist somit möglich.

Gemäß einer weiteren Ausführungsform werden die Einstellparameter im Stillstand der Temperiervorrichtung vor dem Beginn eines Betriebs der Temperiervorrichtung ermittelt und die Einstellparameter zum Starten der Temperiervorrichtung verwendet. Alternativ oder zusätzlich werden die Einstellparameter während des Betriebs, also nach dem Starten der Temperiervorrichtung weiter oder erneut ermittelt und der Betrieb mit den ermittelten Einstellparametern angepasst.

Gemäß einer weiteren Ausführungsform werden die Einstellparameter derart bestimmt, dass die Temperaturen jedes der Temperaturverläufe unterhalb der vorgegebenen oder einer vordefinierten Maximaltemperatur verbleiben. Vorzugsweise liegt die Maximaltemperatur bei 160 °C, 140 °C oder 130 °C.

Dank einer Überwachung der Temperaturverläufe, so dass diese immer unter der Maximaltemperatur liegen, durch Bestimmen entsprechender Einstellparameter, wird sichergestellt, dass das Material des Vorformlings keinen Zustand einnimmt, der eine Umformung erschwert oder verhindert.

Gemäß einer weiteren Ausführungsform werden die Einstellparameter derart bestimmt, dass die Temperaturen jedes der Temperaturverläufe innerhalb des vordefinierten Temperaturbereichs liegen. Ferner wird ein Zeitpunkt im Zeitverlauf der Temperaturverläufe festgelegt, der einem Ort des Förderbereichs entspricht, an dem der Vorformling den Förderbereich verlässt. Die Einstellparameter werden mit dem Verfahren derart bestimmt, dass in diesem Zeitpunkt die Temperatur jedes der Temperaturverläufe innerhalb des vordefinierten Temperaturbereichs liegt. Vorzugsweise liegt die Temperatur jedes der Temperaturverläufe in dem Zeitpunkt in einem Bereich von 110 °C bis zur Maximaltemperatur, die insbesondere 140 °C oder 130 °C beträgt. Es wird somit sichergestellt, dass in jeder der Schicht eine Temperatur bereitgestellt ist, die geeignet ist, um eine effiziente Umformung des Vorformlings auszuführen. Dies erfolgt durch Bestimmen entsprechender Einstellparameter.

Gemäß einer weiteren Ausführungsform wird ein Zeitintervall, für das die Temperaturverläufe und/oder die Wärmeleistungsverläufe bestimmt werden, abhängig von einer Länge des Förderbereichs und einer Fördergeschwindigkeit der Vorformlinge festgelegt. Insbesondere entspricht somit jeder Zeitpunkt im Temperaturverlauf und/oder im Wärmeleistungsverlauf einer Position eines Vorformlings in der Temperiervorrichtung.

Gemäß einer weiteren Ausführungsform umfasst das Verfahren das Ansteuern der Temperiervorrichtung mit den ermittelten Einstellparametern.

Gemäß einer weiteren Ausführungsform umfasst das Verfahren das Temperaturkonditionieren von Vorformlingen mit der Temperiervorrichtung.

Außerdem betrifft die Erfindung eine Steuerung zum Ermitteln von Einstellparametern für eine Temperiervorrichtung zur Temperaturkonditionierung von Vorformlingen aus einem thermoplastischen Material in einem Förderbereich der Temperiervorrichtung. Die Vorformlinge werden durch die Temperaturkonditionierung in der Temperiervorrichtung auf einen nachfolgenden Umformungsvorgang vorbereitet. Mehrere Heizmodule sind entlang des Förderbereichs der Temperiervorrichtung angeordnet. Die Steuerung ist eingerichtet, ein Verfahren nach einer der vorgenannten Ausführungsformen auszuführen.

Außerdem umfasst die Erfindung ein System mit einer Steuerung gemäß der Erfindung und einer Temperiervorrichtung.

Gemäß einer Ausführungsform entspricht das System einer Streckblasmaschine und ist eingerichtet, die temperaturkonditionierten Vorformlinge in Behälter umzuformen.

Außerdem betrifft die Erfindung ein Computerprogrammprodukt, das Instruktionen umfasst, um einen Prozessor, insbesondere eine Steuerung gemäß einem Ausführungsbeispiel, zu veranlassen, die Schritte eines Verfahrens nach einer der Ausführungsformen auszuführen.

Weitere Ausführungsformen ergeben sich anhand der in den Figuren näher erläuterten Ausführungsbeispiele. Hierbei zeigen:
- Fig. 1: ein System mit einer Heizstrecke gemäß einem Ausführungsbeispiel,
- Fig. 2a: einen exemplarischen Querschnitt eines Vorformlings,
- Fig. 2b: einen exemplarischen Längsschnitt durch einen Vorformling,
- Fig. 2c: Schichten einer Wandung des Vorformlings,
- Fig. 3: eine schematische Darstellung eines Preformmodells und eines Temperiervorrichtungsmodells und
- Fig. 4: Schritte des Verfahrens gemäß einem Ausführungsbeispiel.

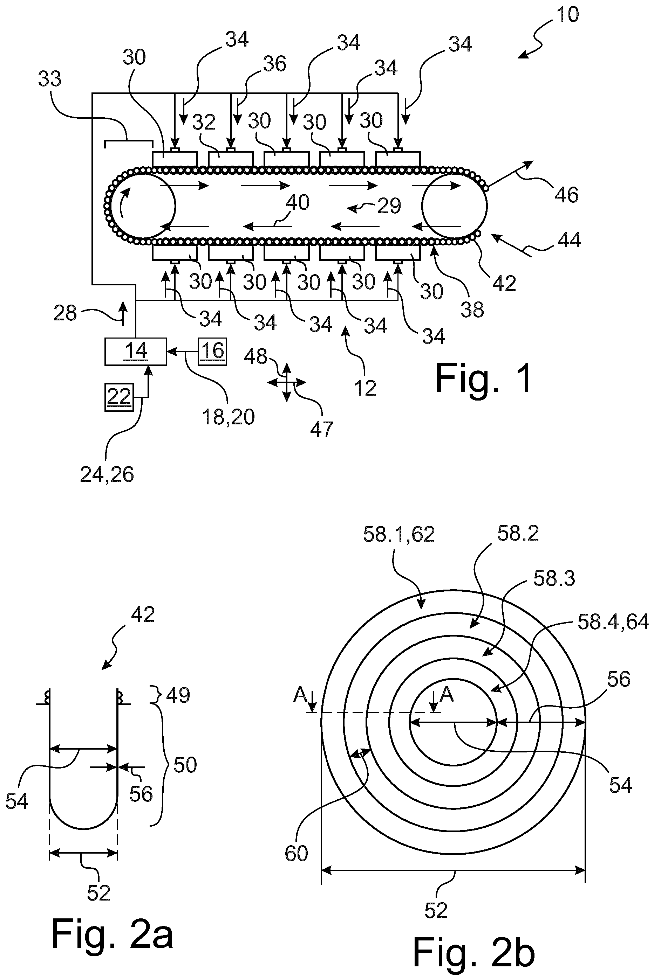

Fig. 1 zeigt ein System 10 gemäß einem Ausführungsbeispiel der Erfindung. Das System 10 umfasst eine Temperiervorrichtung 12, die mit einer Steuerung 14 gesteuert wird. Die Steuerung 14 ist eingerichtet, um von einem Speicher 16 ein Preformmodell 18 sowie ein Temperiervorrichtungsmodell 20 abzurufen und von einer Eingabevorrichtung 22 Werte einer Maximaltemperatur 24 und/oder eines Temperaturbereichs 26, die beispielsweise von einem Benutzer eingegeben werden, zu empfangen.

In Abhängigkeit vom Preformmodell 18, vom Temperiervorrichtungsmodell 20 und von der vorgegebenen Maximaltemperatur 24 und/oder vom vordefinierten Temperaturbereich 26 werden mit der Steuerung 14 Einstellparameter 28 ermittelt und zum Einstellen der Komponenten der Heizstrecke 29 ausgegeben. Die Heizstrecke 29 umfasst als Elemente mehrere Heizmodule 30 sowie ein Kühlelement 32. Außerdem ist ein Kühlbereich 33 vorgesehen, indem keine Heizmodule 30 und Kühlelemente 32 angeordnet sind.

Die Heizmodule 30 sowie das Kühlelement 32 werden von der Steuerung 14 mithilfe der Einstellparameter 28 eingestellt, wobei die Einstellparameter 28, mit denen die Heizmodule 30 eingestellt werden, als Heizleistungsparameter 34 und die Einstellparameter 28, die dem Kühlelement 32 zugeführt werden, als Kühlparameter 36 bezeichnet werden. Die Heizmodule 30 sowie das Kühlelement 32 sind entlang eines Förderbereichs 38 angeordnet, um entlang einer Förderrichtung 40 im Förderbereich 38 geförderte Vorformlinge 42 auf einen nachfolgenden Umformungsvorgang vorbereitet werden, indem diese mit der Temperiervorrichtung 12 temperaturkonditioniert werden. Im Bereich 44 werden die Vorformlinge 42 daher der Temperiervorrichtung 12 zugeführt, entlang des Förderbereichs 38 in Förderrichtung 40 transportiert und im Bereich 46 von der Temperiervorrichtung 12 ausgegeben, um in einem nachfolgenden Prozessschritt umgeformt zu werden. Jedes der Heizmodule 30 und des Kühlelements 32 sind aus der dargestellten Position zumindest in einer quer zur Förderrichtung 40 verlaufenden Richtung 47 sowie in einer parallel zur Förderrichtung 40 verlaufenden Richtung 48 verstellbar.

Fig. 2a zeigt einen Vorformling 42 im Querschnitt. Der Vorformling 42 umfasst einen Verschlussbereich 49 sowie einen Füllbereich 50. Vorzugsweise wird nur der Füllbereich 50 in einem später nach einer Temperaturkonditionierung folgenden Umformung umgeformt. Zumindest im Füllbereich 50 weist der Vorformling 42 einen Außendurchmesser 52 sowie einen Innendurchmesser 54 auf. Die Differenz zwischen dem Außendurchmesser 52 und dem Innendurchmesser 54 entspricht einer Wanddicke 56 des Vorformlings 42.

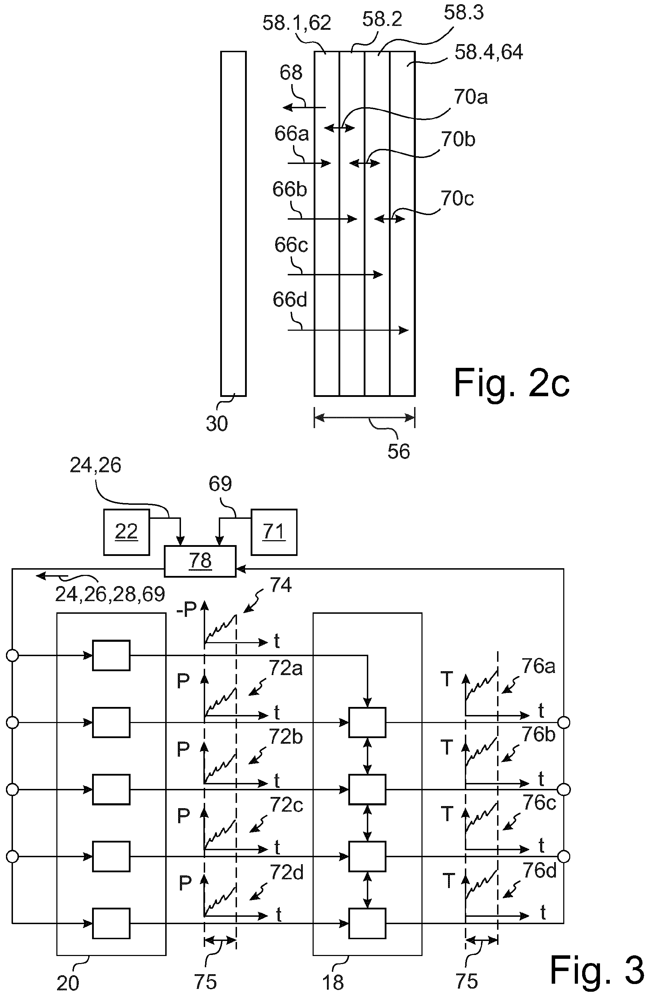

Fig. 2b zeigt einen Vorformling 42 im Schnitt durch den Füllbereich 50. Die Verhältnisse sind hier zur besseren Beschreibung eines Preformmodells 18 des Vorformlings 42 in unrealistischer Weise dargestellt. Demnach ist wie bereits in Fig. 2a auch in Fig. 2b der Außendurchmesser 52 sowie der Innendurchmesser 54 und die Wanddicke 56 dargestellt. Bei einem Preformmodell 18 des Vorformlings 42 ist die Wandung in vier Schichten 58.1, 58.2, 58.3, 58.4 unterteilt. Es wird gemäß diesem Ausführungsbeispiel davon ausgegangen, dass jede der Schichten 58.1, 58.2, 58.3, 58.4 eine identische Dicke 60 aufweist. Die Schicht 58.1 entspricht einer äußeren Schicht 62 und die Schicht 58.4 entspricht einer inneren Schicht 64. Ferner ist eine Schnittlinie A eingezeichnet und der Schnitt entlang dieser Linie A zumindest für einen Teil des Füllbereichs 50 in Fig. 2c dargestellt.

Fig. 2c zeigt die Schichten 58.1, 58.2, 58.3, 58.4 eines Preformmodells 18 des Vorformlings 42 mit deren theoretischen Wärmeleistungseinträgen und einem Konvektionsleistungsaustrag. Exemplarisch ist auch eines der Heizmodule 30 dargestellt. Exemplarisch stellt Fig. 2c demnach die Wärmeleistung, die in die Schichten 58.1, 58.2, 58.3, 58.4 eingetragen wird dar, die abhängig vom Einstellparameter 28 des Heizmoduls 30 sind. Demnach wird in die äußere Schicht 58.1, 62 des Vorformlings 42 eine erste Wärmeleistung 66a eingetragen. In die weitere Schicht 58.2 wird eine zweite Wärmeleistung 66b eingetragen. In die weitere Schicht 58.3 wird die Wärmeleistung 66c eingetragen und in die innere Schicht 58.4, 64 wird die Wärmeleistung 66d eingetragen. Zusätzlich tritt Wärme zumindest aus der äußeren Schicht 62, 58.1 als Konvektionsleistung 68, die auch Konvektionsstrahlung genannt werden kann, aus. Die Konvektionsleistung 68 ist auch abhängig von einer Umgebungstemperatur 69. Zwischen den Schichten erfolgt jeweils ebenfalls ein Wärmeleistungsaustausch 70a, 70b, 70c. Unter Berücksichtigung weiterer Ausgestaltungen der Wandung, nämlich beispielsweise der zugrunde gelegten Wanddicke 56 sowie den entsprechenden Schichtdicken 60 und dem Material kann zusammen mit den angenommenen Wärmeleistungseinträgen und dem Konvektionsleistungsaustrag sowie dem Austausch der Wärmeleistung unter den Schichten ein Preformmodell 18 gebildet werden, das das Verhalten eines realen Vorformlings 42 beschreibt und mit dem die Steuerung 14 die Einstellparameter 28 bestimmt.

Fig. 3 zeigt ein Temperiervorrichtungsmodell 20, dem als Eingabewerte Einstellparameter 28 zugeführt werden. Außerdem wird eine Maximaltemperatur 24 und ein Temperaturbereich 26 zugeführt, die über eine Eingabevorrichtung 22 eingegeben werden. Außerdem wird eine Umgebungstemperatur 69 zugeführt, die mit einem Temperatursensor 71 bestimmt wird. Das Temperiervorrichtungsmodell 20 ermittelt anhand dieser zugeführten Werte 24, 26, 28, 69 zeitliche Wärmeleistungsverläufe 72a, 72b, 72c, 72d sowie einen Konvektionsleistungsverlauf 74, die auf einen Vorformling 42 wirken, wenn dieser entlang der Förderrichtung 40 gefördert wird.

Jeder der Zeitverläufe entspricht hierbei dem Verlauf der Wärmeleistung oder der Konvektionsleistung in einem Zeitintervall 75, das zu einem Zeitpunkt beginnt, wenn der Vorformling 42 theoretisch im Bereich 44 der Temperiervorrichtung 12 zugeführt wird. Die Zeitintervalle enden an einem Zeitpunkt, an dem ein Vorformling 42 theoretisch den Ausgangsbereich 46 der Temperiervorrichtung 12 verlässt. Das Zeitintervall der zeitlichen Verläufe ist somit an eine Fördergeschwindigkeit gekoppelt, die beispielsweise ebenfalls durch einen der Einstellparameter 28 anpassbar ist und zur Veränderung des Zeitintervalls 75 führt.

Die Wärmeleistungsverläufe 72a, 72b, 72c, 72d sind jeweils einer der Schichten 58.1, 58.2, 58.3, 58.4 zugeordnet und entsprechen jeweils dem zeitlichen Verlauf einer eintragbaren Wärmeleistung 66a, 66b, 66c, 66d über die Zeit, nämlich über das Zeitintervall 75.. Zudem wird für die äußere Schicht 58.1, 62 ein Konvektionsleistungsverlauf 74 vorgegeben. Die Wärmeleistungsverläufe 72a, 72b, 72c, 72d sowie der Konvektionsleistungsverlauf 74 werden einem Preformmodell 18 zugeführt, das für jede der Schichten 58.1, 58.2, 58.3, 58.4 einen zeitlichen Temperaturverlauf 76a, 76b, 76c, 76d in Abhängigkeit von den Wärmeleistungsverläufen 72a, 72b, 72c, 72d und dem Konvektionsverlauf 74 bestimmt. Die Temperaturverläufe 76a, 76b, 76c, 76d geben die Temperaturen der Schichten 58.1, 58.2, 58.3, 58.4 im Zeitintervall 75 an.

Die Temperaturverläufe 76a, 76b, 76c, 76d werden einer Logik 78 zugeführt, der die Maximaltemperatur 24 sowie der maximale Temperaturbereich 26 zugeführt wird. Die Logik 78 prüft, ob alle Temperaturverläufe 76a, 76b, 76c, 76d unterhalb der Maximaltemperatur 24 liegen und ob zum Endzeitpunkt des Zeitintervalls 75 die Temperatur jeder der Schichten 58.1, 58.2, 58.3, 58.4 in dem vorgegebenen Temperaturbereich 26 liegt. Ist dies nicht der Fall, gibt die Logik 78 neue angepasste Einstellparameter 28 aus, mit denen erneut in Abhängigkeit vom Temperiervorrichtungsmodell 20 und vom Preformmodell 18 Temperaturverläufe 76a, 76b, 76c, 76d bestimmt werden.

Die Schritte werden so lange wiederholt, bis Einstellparameter 28 gefunden werden, aus denen Temperaturverläufe 76a, 76b, 76c, 76d resultieren, bei denen die maximale Temperatur 24 nicht überschritten wird und die jeweils im Ende des Zeitintervalls 75 Temperaturen im Temperaturbereich 26 aufweisen. Die zuletzt vorgegebenen Einstellparameter 28, die diese Kriterien erfüllen, werden dann verwendet, um die Temperiervorrichtung 12 zu betreiben.

Vorzugsweise wird das Verfahren auch während des Betriebs ausgeführt und im Temperiervorrichtungsmodell 20 ein sich ändernder Zustand der realen Temperiervorrichtung 12, beispielsweise ein Erwärmen nach einem initialen Starten der Temperiervorrichtung, berücksichtigt. Demnach werden die Einstellparameter 28 kontinuierlich neu bestimmt, so dass die Temperaturverläufe 76a, 76b, 76c, 76d die genannten Kriterien erfüllen. Die so angepassten Einstellparameter 28 werden entsprechend zur Anpassung des Betriebs der Heizstrecke 29 verwendet.

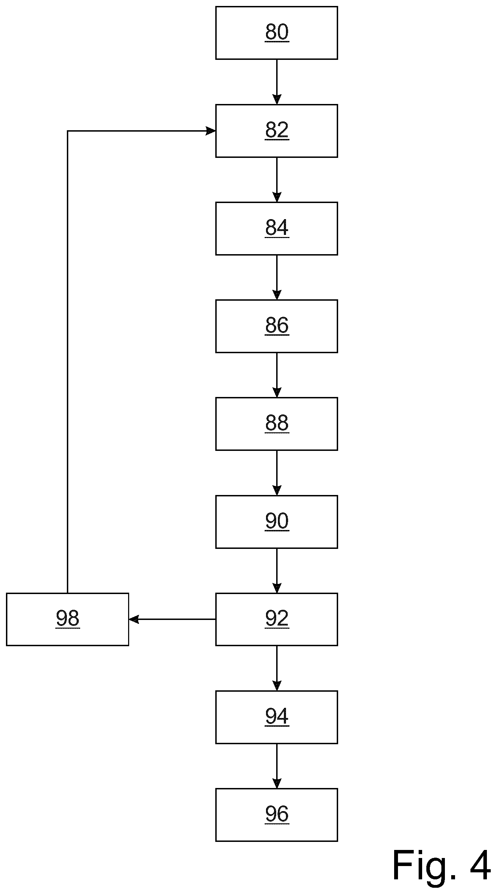

Fig. 4 zeigt die Schritte des Verfahrens gemäß einem Ausführungsbeispiel. In einem Schritt 80 werden Einstellparameter 28 initialisiert und in einem Schritt 82 einem Temperiervorrichtungsmodell 20 zugeführt. Im Schritt 84 werden anhand des Temperiervorrichtungsmodells 20 Wärmeleistungsverläufe 72a, 72b, 72c, 72d bestimmt und im Schritt 86 an ein Preformmodell 18 übergeben. Im Schritt 88 werden mit dem Preformmodell 18 zeitliche Temperaturverläufe 76a, 76b, 76c, 76d bestimmt und im Schritt 90 ausgegeben. Im Schritt 92 werden die Temperaturverläufe 76a, 76b, 76c, 76d in einer Logik 78 mit einer vorgegebenen Maximaltemperatur 24 und/oder einem vordefinierten Temperaturbereich 26 verglichen. Im Schritt 94 werden im Fall, dass bei dem Vergleich bestimmte Kriterien erfüllt wurden, die Einstellparameter 28 ausgegeben und im Schritt 96 zum Betreiben der Temperiervorrichtung 12 verwendet. Wurden im Schritt 92 die genannten Kriterien nicht erfüllt, werden in einem Schritt 98 die Einstellparameter 28 angepasst und danach erneut Schritt 82 durchgeführt.

### Bezugszeichenliste

- 10: System
- 12: Temperiervorrichtung
- 14: Steuerung
- 16: Speicher
- 18: Preformmodell
- 20: Temperiervorrichtungsmodell
- 22: Eingabevorrichtung
- 24: Maximaltemperatur
- 26: Temperaturbereich
- 28: Einstellparameter
- 29: Heizstrecke
- 30: Heizmodule
- 32: Kühlelemente
- 33: Kühlbereich
- 34: Heizleistungsparameter
- 36: Kühlparameter
- 38: Förderbereich
- 40: Förderrichtung
- 42: Vorformlinge
- 44: Bereich
- 46: Bereich
- 47: quer zur Förderrichtung verlaufende Richtung
- 48: parallel zur Förderrichtung verlaufende Richtung
- 49: Verschlussbereich
- 50: Füllbereich
- 52: Außendurchmesser
- 54: Innendurchmesser
- 56: Wanddicke
- 58.1: Schicht
- 58.2: Schicht
- 58.3: Schicht
- 58.4: Schicht
- 60: identische Dicke
- 62: äußere Schicht
- 64: innere Schicht
- 66a: erste Wärmeleistung
- 66b: zweite Wärmeleistung
- 66c: Wärmeleistung
- 66d: Wärmeleistung
- 68: Konvektionsstrahlung
- 69: Umgebungstemperatur
- 70a: Wärmeaustausch
- 70b: Wärmeaustausch
- 70c: Wärmeaustausch
- 71: Temperatursensor
- 72a: zeitlicher Wärmeleistungsverlauf
- 72b: zeitlicher Wärmeleistungsverlauf
- 72c: zeitlicher Wärmeleistungsverlauf
- 72d: zeitlicher Wärmeleistungsverlauf
- 74: Konvektionsverlauf
- 75: Zeitintervall
- 76a: Temperaturverlauf
- 76b: Temperaturverlauf
- 76c: Temperaturverlauf
- 76d: Temperaturverlauf
- 78: Logik
- 80: Initialisieren Einstellparameter
- 82: Zuführen Einstellparameter zu Temperiervorrichtungsmodell
- 84: Bestimmen Wärmeleistungsverläufe
- 86: Übergeben Wärmeleistungsverläufe an Preformmodell
- 88: Bestimmen Temperaturverläufe
- 90: Ausgeben Temperaturverläufe
- 92: Vergleichen Temperaturverläufe
- 94: Ausgeben Einstellparameter
- 96: Verwenden Einstellparameter
- 98: Anpassen Einstellparameter

- A: Schnittlinie

## Patentansprüche

1. Verfahren zum Betreiben einer Temperiervorrichtung (12), umfassend ein Ermitteln von Einstellparametern (28) mit einer Steuerung (14) für die Temperiervorrichtung (12) zur Temperaturkonditionierung von Vorformlingen (42) aus einem thermoplastischen Material in einem Förderbereich (38) der Temperiervorrichtung (12), wobei die Vorformlinge (42) durch die Temperaturkonditionierung in der Temperiervorrichtung (12) auf einen nachfolgenden Umformungsvorgang vorbereitet werden, wobei mehrere Heizmodule (30) entlang des Förderbereichs (38) der Temperiervorrichtung (12) angeordnet sind,
wobei die Steuerung (14) folgende Schritte zum Ermitteln der Einstellparameter (28) ausführt:
- Abrufen eines Preformmodells (18), das einem Modell eines Vorformlings (42) entspricht, wobei das Preformmodell (18) einen zeitlichen Temperaturverlauf in jeder von mehreren radial durch das Preformmodell (18) definierten Schichten einer Wandung des Vorformlings (42) in Abhängigkeit von mindestens einem in mindestens eine der Schichten eingetragenen zeitlichen Wärmeleistungsverlauf beschreibt,
- Abrufen eines Temperiervorrichtungsmodells (20), das einem Modell der Temperiervorrichtung (12) entspricht, wobei das Temperiervorrichtungsmodell (20) den in mindestens eine Schicht eintragbaren zeitlichen Wärmeleistungsverlauf im durch das Temperiervorrichtungsmodell (20) definierten Förderbereich (38) in Abhängigkeit von den Einstellparametern (28) für die Heizmodule (30), die Heizleistungsparametern (34) entsprechen, beschreibt,
- Vorgeben einer Maximaltemperatur (24) und/oder eines vordefinierten Temperaturbereichs (26) und
- Ermitteln der Einstellparameter (28) mit denen durch das Temperiervorrichtungsmodell (20) der mindestens eine zeitliche Wärmeleistungsverlauf bestimmbar ist, mit dem durch das Preformmodell (18) Temperaturen aller Temperaturverläufe (76a, 76b, 76c, 76d), zumindest in einem vordefinierten Zeitpunkt der Temperaturverläufe (76a, 76b, 76c, 76d), bestimmbar sind, die unterhalb der Maximaltemperatur und/oder innerhalb des vordefinierten Temperaturbereichs (26) liegen.

2. Verfahren nach Anspruch 1, wobei mehreren oder allen Heizmodulen (30) jeweils ein Heizleistungsparameter (34) als Einstellparameter (28) zugeordnet ist, der die zu erzeugende Heizleistung des zugeordneten Heizmoduls angibt, und das Verfahren das Betreiben der Heizmodule (30) mit dem zugeordneten Heizleistungsparameter (34) umfasst und/oder
mehreren oder allen Heizmodulen (30) jeweils ein Positionsparameter als Einstellparameter (28) zugeordnet ist, der die Position des Heizmoduls am Förderbereich (38) angibt, und das Verfahren das Anordnen der Heizmodule (30) an der zugeordneten Position oder das Ausgeben einer Angabe der zugeordneten Position für eine manuelle Anordnung durch einen Benutzer umfasst.

3. Verfahren nach Anspruch 1 oder 2, wobei mit dem Temperiervorrichtungsmodell (20) mehrere Wärmeleistungsverläufe (72a, 72b, 72c, 72d) jeweils für eine der Schichten beschrieben werden und mit dem Preformmodell (18) jeder jeweils einer Schicht zugeordnete Temperaturverlauf in Abhängigkeit von dem der Schicht zugeordneten Wärmeleistungsverlauf beschrieben wird.

4. Verfahren nach einem der vorhergehenden Ansprüche, wobei die Temperiervorrichtung (12) mindestens einen am Förderbereich (38) angeordneten Kühlbereich oder ein am Förderbereich (38) angeordnetes Kühlelement (32), insbesondere einen Lüfter, aufweist,
das Temperiervorrichtungsmodell (20) mindestens eine aus mindestens einer Schicht austragbaren zeitlichen Konvektionsleistungsverlauf (74) im durch das Temperiervorrichtungsmodell (20) definierten Förderbereich (38) in Abhängig von einem Einstellparameter (28), der einem Kühlparameter für den Kühlbereich oder das Kühlelement (32) entspricht, beschreibt und
mit dem Preformmodell (18) der zeitliche Temperaturverlauf (18) in mindestens einer Schicht zusätzlich in Abhängigkeit von dem Konvektionsleistungsverlauf (74) beschrieben wird und wobei
das Ermitteln der Einstellparameter (28) das Ermitteln des Kühlparameters umfasst.

5. Verfahren nach Anspruch 4, wobei der Kühlparameter (36) einem Positionsparameter entspricht, der die Position des Kühlbereichs oder des Kühlelements (32) am Förderbereich (38) angibt, und das Verfahren das Anordnen des Kühlbereichs oder des Kühlelements (32) an der zugeordneten Position umfasst und/oder
der Kühlparameter (36) einer Ansteuerleistung des Kühlelements entspricht, der die zu erzeugende Kühlleistung des Kühlelements (32) angibt, und das Verfahren das Betreiben des Kühlelements (32) mit der zugeordneten Ansteuerleistung (36) umfasst.

6. Verfahren nach einem der vorhergehenden Ansprüche, wobei im Preformmodell (18) der mit dem Preformmodell (18) ermittelte Temperaturverlauf mindestens einer Schicht abhängig von mindestens einem mit dem Preformmodell (18) beschriebenen Temperaturverlauf einer benachbarten Schicht ist.

7. Verfahren nach einem der vorhergehenden Ansprüche, wobei die Einstellparameter (28) im Stillstand der Temperiervorrichtung (12) vor dem Beginn eines Betriebs der Temperiervorrichtung (12) ermittelt werden und die Einstellparameter (28) zum Starten der Temperiervorrichtung (12) verwendet werden und/oder
die Einstellparameter (28) während des Betriebs ermittelt und der Betrieb mit den ermittelten Einstellparametern (28) angepasst wird.

8. Verfahren nach einem der vorhergehenden Ansprüche wobei die Einstellparameter (28) derart bestimmt werden, dass die Temperaturen jedes der Temperaturverläufe (76a, 76b, 76c, 76d) unterhalb einer vordefinierten Maximaltemperatur (24), die vorzugsweise 140 Grad Celsius oder 130 Grad Celsius beträgt, bleiben und/oder
dass die Temperaturen jedes der Temperaturverläufe (76a, 76b, 76c, 76d) in einem Zeitpunkt, der einem Ort des Förderbereichs (38) entspricht, an dem der Vorformling (42) den Förderbereich (38) verlässt, innerhalb eines vordefinierten Temperaturbereichs (26), vorzugsweise im Bereich von 110 Grad Celsius bis zur Maximaltemperatur (24), liegen.

9. Verfahren nach einem der vorhergehenden Ansprüche, wobei ein Zeitintervall (75), für das die Temperaturverläufe (76a, 76b, 76c, 76d) und/oder die Wärmeleistungsverläufe (72a, 72b, 72c, 72d) bestimmt werden abhängig von einer Länge des Förderbereichs (38) und einer Fördergeschwindigkeit der Vorformlinge (42) ist.

10. Verfahren nach einem der vorhergehenden Ansprüche, wobei das Verfahren das Ansteuern der Temperiervorrichtung (12) mit den ermittelten Einstellparametern (28) umfasst.

11. Verfahren nach einem der vorhergehenden Ansprüche, wobei das Verfahren das Temperaturkonditionieren von Vorformlingen (42) mit der Temperiervorrichtung (12) umfasst.

12. Steuerung zum Ermitteln von Einstellparametern (28) für eine Temperiervorrichtung (12) zur Temperaturkonditionierung von Vorformlingen (42) aus einem thermoplastischen Material in einem Förderbereich (38) der Temperiervorrichtung (12), wobei die Vorformlinge (42) durch die Temperaturkonditionierung in der Temperiervorrichtung (12) auf einen nachfolgenden Umformungsvorgang vorbereitet werden, wobei mehrere Heizmodule (30) entlang des Förderbereichs (38) der Temperiervorrichtung (12) angeordnet sind, und die Steuerung eingerichtet ist, ein Verfahren nach einem der Ansprüche 1 bis 11 auszuführen.

13. System mit einer Steuerung nach Anspruch 11 und einer Temperiervorrichtung (12).

14. System nach Anspruch 12 oder 13, wobei das System einer Streckblasmaschine entspricht, und eingerichtet ist, die temperaturkonditionierten Vorformlinge (42) in Behälter umzuformen.

15. Computerprogrammprodukt, das Instruktionen umfasst, um einen Prozessor, insbesondere eine Steuerung nach den Ansprüchen 12 bis 14, zu veranlassen, die Schritte eines Verfahrens nach einem der Ansprüche 1 bis 11 auszuführen.
